# EUROPÄISCHE PATENTSCHRIFT

(11) **EP 0 974 498 B1**
(45) Veröffentlichungstag und Bekanntmachung des Hinweises auf die Patenterteilung: **28.12.2005**
(21) Anmeldenummer: 99113585.6
(22) Anmeldetag: 08.07.1999
(51) Int. Cl.: B60R 21/16

(54) **Gassack-Rückhaltesystem**
Air bag restraint system
Système de retenue à sac de sécurité gonflable

(30) Priorität: 22.07.1998 DE 29813082 U
(43) Veröffentlichungstag der Anmeldung: 26.01.2000
(73) Patentinhaber: TRW Automotive GmbH, 73553 Alfdorf (DE)
(72) Erfinder: Ellerbrok, Norbert, 73553 Alfdorf (DE); Jürgens, Gerd, 73553 Alfdorf (DE); Knödler, Gianula, 73537 Schwäbisch Gmünd (DE); Schaub, Swen, 73553 Alfdorf (DE)
(74) Vertreter: Sties, Jochen

(56) Entgegenhaltungen:
- WO-A-97/46425
- DE-A- 19 521 071
- US-A- 5 454 595
- US-A- 5 732 973

## Beschreibung

Die Erfindung betrifft ein Gassack-Rückhaltesystem mit einem mehrstufigen Gasgenerator und einem mit diesem in Strömungsverbindung stehenden Gassack, der zwei separate Gewebeteile aufweist, die wenigstens annähernd kongruent sind, wobei mindestens eine Reißnaht vorgesehen ist, die im intakten Zustand eine Falte bildet, wodurch das Volumen des Gassacks gegenüber einem Zustand mit zerstörter Reißnaht verringert ist.

Ein solches Gassack-Rückhaltesystem ist aus der WO97/46425 bekannt und ermöglicht es, eine optimal auf die jeweiligen Bedingungen abgestellte Rückhaltewirkung bereitzustellen. Bei geringen Fahrzeuggeschwindigkeiten und/oder geringem Gewicht des zurückzuhaltenden Fahrzeuginsassens sowie geringem Abstand des Fahrzeuginsassens von der Abdeckung des Gassacks wird nur eine erste Stufe des Gasgenerators aktiviert, so daß eine vergleichsweise geringe Menge von Druckgas zum Entfalten des Gassacks bereitgestellt wird. In diesem Fall bleibt die Reißnaht intakt, so daß der Gassack trotz der geringen bereitgestellten Menge an Druckgas vollständig entfaltet wird. Bei höheren Fahrzeuggeschwindigkeiten und/oder hohem Gewicht des zurückzuhaltenden Fahrzeuginsassens sowie großem Abstand des Fahrzeuginsassens von der Abdeckung des Gassacks werden dagegen mehrere Stufen des Gasgenerators aktiviert, so daß eine große Menge von Druckgas bereitgestellt wird. Dies führt dazu, daß die Reißnaht beim Entfalten des Gassacks zerstört wird, so daß der Gassack zur Aufnahme der größeren Menge an Druckgas auch ein größeres Volumen aufweist.

Aus der US-A-5,454,595 ist ein Gassack bekannt, der an einer Seite mit einem Gewebestreifen versehen ist, der zusammen mit einer Reißnaht eine Falte bildet. Diese Falte wird freigegeben, sobald der Innendruck im Gassack einen vorbestimmten Wert überschreitet.

Die Erfindung schafft ein Gassack-Rückhaltesystem der eingangs genannten Art, welches dadurch gekennzeichnet ist, daß ein Gewebestreifen vorgesehen ist, der mit dem Rand des ersten Gewebeteils und dem Rand des zweiten Gewebeteils vernäht ist, und daß die Falte im Gewebestreifen gebildet ist. Diese Gestaltung ermöglicht eine besonders einfache und vorteilhafte Anpassung des Gassacks an die jeweiligen Anforderungen.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Die Figuren 1 bis 3 in einem Querschnitt ein erfindungsgemäßes Gassack-Rückhaltesystem in drei verschiedenen Zuständen;
- Figur 4 in einer schematischen Draufsicht den Gassack aus den Figuren 1 bis 3;
- die Figuren 5 und 6 in einer schematischen Draufsicht bzw. einem schematischen Querschnitt eine Ausführungsform, die aber kein Teil der Erfindung ist;
- die Figuren 7 und 8 abgewickelt den Gewebestreifen, der bei dem Gassack des erfindungsgemäßen Gassack-Rückhaltesystems verwendet wird; und
- die Figuren 9 bis 15 verschiedene Anordnungen der Reißnaht bei einem Gassack des erfindungsgemäßen Gassack-Rückhaltesystems.

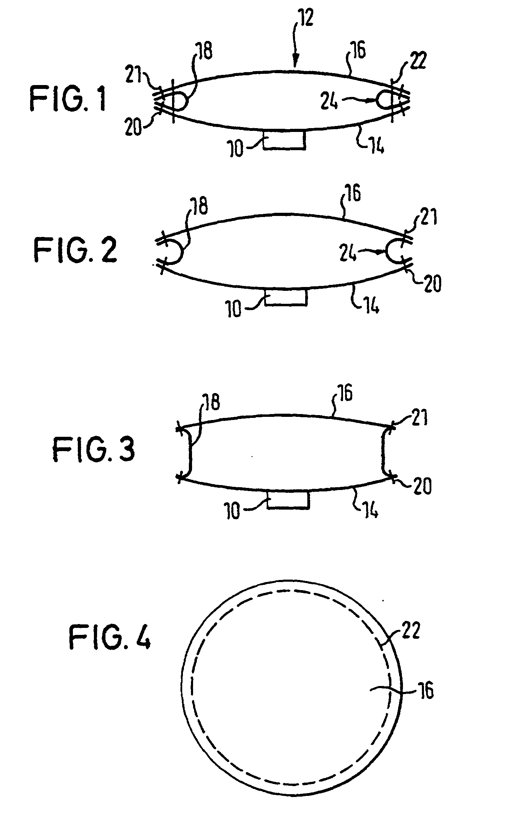

In den Figuren 1 bis 4 ist ein erfindungsgemäßes Gassack-Rückhaltesystem gemäß einer ersten Ausführungsform gezeigt. Es enthält einen mehrstufigen Gasgenerator 10, der mit einem Gassack 12 in Strömungsverbindung steht. Dieser besteht aus einem ersten Gewebeteil 14, einem zweiten Gewebeteil 16 und einem Gewebestreifen 18. Das erste und das zweite Gewebeteil 14, 16 sind etwa kreisförmig und zueinander kongruent ausgeführt, und der Gewebestreifen 18 ist mit den Gewebeteilen 14, 16 entlang deren Umfangsrändern mittels Nähten 20, 21 vernäht.

Durch die Gewebeteile 14, 16 und den Gewebestreifen hindurch erstreckt sich eine Reißnaht 22, welche die beiden Gewebeteile 14, 16 in einem geringen Abstand von ihrem Rand aneinander befestigt und dabei den Gewebestreifen 18 in einer Falte 24 hält, die zum Innenraum des Gassacks 12 hin angeordnet ist (siehe Figur 1).

Wenn im Bedarfsfall nicht sämtliche Stufen des Gasgenerators aktiviert werden, ist der im Inneren des Gassacks 12 entstehende Druck nicht ausreichend hoch, um die Reißnaht 22 zu zerstören. Die Falte 24 ist somit auch bei entfaltetem Gassack vorhanden.

Wenn dagegen sämtliche Stufen des Gasgenerators 10 aktiviert werden, führt der sich im Inneren des Gassacks aufbauende Druck dazu, daß die Reißnaht 22 zerstört wird (siehe Figur 2). Daraufhin wird die Falte 24 freigegeben, und der Gassack kann sich auf ein größeres Volumen entfalten (siehe Figur 3).

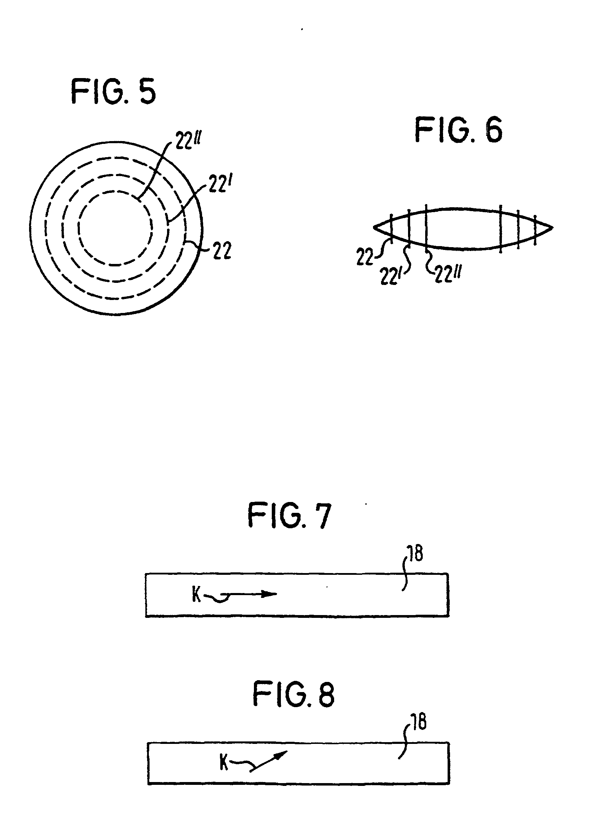

In den Figuren 5 und 6 ist eine Ausführungsform eines Gassack-Rückhaltesystems gezeigt, die kein Teil der Erfindung ist. Diese Ausführungsform unterscheidet sich von der ersten Ausführungsform dahingehend, daß drei Reißnähte 22, 22', 22" vorgesehen sind, die entlang zueinander konzentrischer Kreise angeordnet sind. Die Reißnähte sind so dimensioniert, daß sie nach und nach zerstört werden, so daß auch Zwischenstadien zwischen einem Zustand mit vollständig intakten Reißnähten und einem Zustand mit vollständig zerstörten Reißnähten möglich sind.

In den Figuren 7 und 8 sind zwei Varianten des Gewebestreifens 18 gezeigt. Der Pfeil K symbolisiert jeweils die Kettrichtung des verwendeten Gewebes. In Figur 7 ist die Kettrichtung also parallel zu den längeren Seiten des Gewebestreifens. Dies führt zu einer geringen Querdehnung, wenn der Gassack gefüllt wird. In Figur 8 ist der Gewebestreifen 18 dagegen so geschnitten, daß die Kettrichtung schräg zu den längeren Seiten verläuft. Dies führt zu einer hohen Querdehnung, wenn der Gassack gefüllt wird, wodurch Spannungsspitzen abgebaut werden.

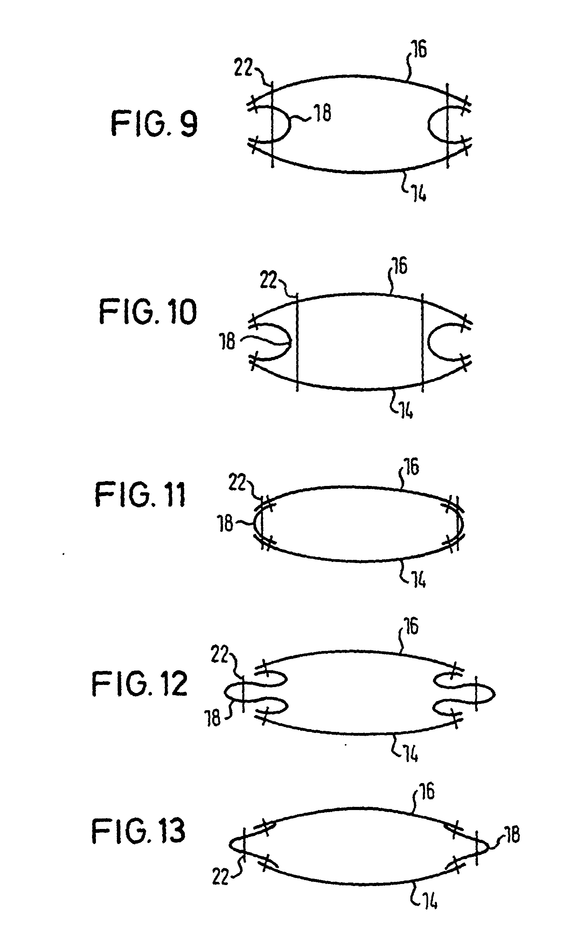

In den Figuren 9 bis 13 sind verschiedene Anordnungen der Reißnaht 22 gezeigt.

Bei der Ausführungsform gemäß Figur 9 verläuft die Reißnaht etwa mittig durch die mittels des Gewebestreifens 18 gebildete Falte. In Figur 10 dagegen verläuft die Reißnaht innerhalb der vom Gewebestreifen 18 gebildeten Falte; bei dieser Gestaltung ist der Unterschied des Volumens des Gassacks zwischen dem Zustand mit intakter Reißnaht und dem Zustand mit zerstörter Reißnaht besonders groß.

Bei der Ausführungsform gemäß Figur 11 ist das Gewebeteil 18 mit dem Randbereich der Gewebeteile 14, 16 vernäht, jedoch im Abstand vom Außenumfang. Außerdem erstreckt sich die Reißnaht 22 durch den Gewebestreifen 18 hindurch, dessen Falte bei dieser Ausführungsform nicht zum Inneren des Gassacks, sondern zum Außenraum gerichtet ist.

Bei der Ausführungsform gemäß den Figuren 12 und 13 liegt die vom Gewebestreifen 18 gebildete Falte nahezu vollständig außerhalb des Gassacks. Die Reißnaht 22 erfaßt ausschließlich den Gewebestreifen 18 und nicht die Gewebeteile 14, 16.

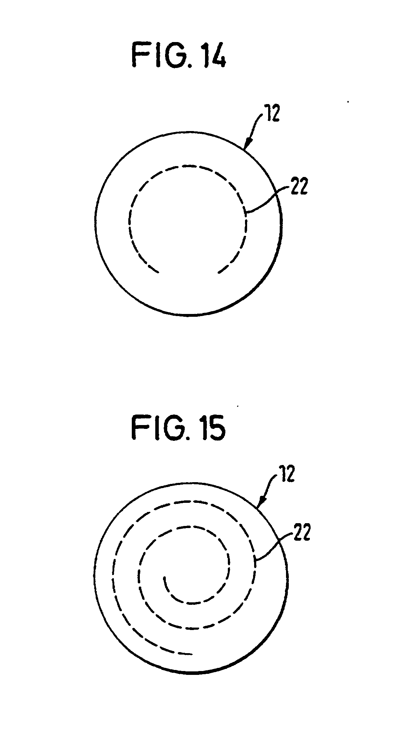

Bei der Ausführungsform gemäß Figur 14 ist eine Reißnaht 22 gezeigt, die sich über einen Kreisbogen erstreckt. Die Reißnaht ist so angeordnet, daß ihr offener Bereich dem Oberkörper des zurückzuhaltenden Fahrzeuginsassen zugewandt ist. Auf diese Weise wird der Gassack in seinem dem Oberkörper des Fahrzeuginsassen zugewandten Bereich zuerst entfaltet, also in einem Bereich, in dem zeitlich gesehen zuerst eine Rückhaltewirkung erforderlich ist.

Bei der Ausführungsform gemäß Figur 15 ist eine Reißnaht gezeigt, die sich über eine spiralförmige Bahn erstreckt. Diese Reißnaht wird je nach dem vom Gasgenerator bereitgestellten Volumen an Druckgas unter Umständen nur teilweise zerstört, so daß auch unterschiedliche Mengen an bereitgestelltem Druckgas, resultierend z.B. aus unterschiedlichen Betriebstemperaturen wie -35°C oder +85°C, vom Gassack mit einem daran angepaßten Volumen aufgenommen werden können.

Die Reißnaht könnte auch als zweigängige Spirale ausgeführt werden. Dabei könnten die innenliegenden Enden der beiden Gänge miteinander verbunden werden, so daß eine durchgehende Reißnaht erhalten wird.

## Patentansprüche

1. Gassack-Rückhaltesystem mit einem mehrstufigen Gasgenerator (10) und einem mit diesem in Strömungsverbindung stehenden Gassack (12), der zwei separate Gewebeteile (14, 16) aufweist, die wenigstens annähernd kongruent sind, wobei mindestens eine Reißnaht (22) vorgesehen ist, die im intakten Zustand eine Falte (24) bildet, wodurch das Volumen des Gassacks (12) gegenüber einem Zustand mit zerstörter Reißnaht (22) verringert ist,
**dadurch gekennzeichnet, daß** ein Gewebestreifen (18) vorgesehen ist, der mit dem Rand des ersten Gewebeteils (14) und dem Rand des zweiten Gewebeteils (16) vernäht ist, und daß die Falte (24) im Gewebestreifen (18) gebildet ist.

2. Gassack nach Anspruch 1, **dadurch gekennzeichnet, daß** das erste und das zweite Gewebeteil (14, 16) kreisförmig sind.

3. Gassack nach einem der Ansprüche 1 und 2, **dadurch gekennzeichnet, daß** die Reißnaht (22) das erste und das zweite Gewebeteil (14, 16) miteinander verbindet.

4. Gassack nach einem der Ansprüche 1 bis 3, **dadurch gekennzeichnet, daß** die Reißnaht (22) durch den Gewebestreifen (18) verläuft.

5. Gassack nach einem der Ansprüche 1 bis 4, **dadurch gekennzeichnet, daß** die Falte (24) im Inneren des Gassacks (12) angeordnet ist.

6. Gassack nach einem der Ansprüche 1 bis 4, **dadurch gekennzeichnet, daß** die Falte (24) außerhalb des Gassacks (12) angeordnet ist.

7. Gassack nach einem der vorhergehenden Ansprüche, **dadurch gekennzeichnet, daß** mehrere Reißnähte (22, 22', 22'') vorgesehen sind, die nacheinander zerstörbar sind.

8. Gassack nach Anspruch 1, **dadurch gekennzeichnet, daß** das erste und das zweite Gewebeteil (14, 16) eine ovale oder elliptische Form haben.

## Claims

1. A gas bag restraint system comprising a multi-stage inflator (10) and a gas bag (12) which is in flow connection therewith and has two separate fabric parts (14, 16) which are at least approximately congruent, at least one tear seam (22) being provided which in its intact condition forms a fold (24), whereby the volume of the gas bag (12) is reduced as compared to a condition in which the tear seam (22) is destroyed,
**characterized in that** a fabric strip (18) is provided which is sewn to the edge of the first fabric part (14) and to the edge of the second fabric part (16), and that the fold (24) is formed in the fabric strip (18).

2. The gas bag as set forth in claim 1, **characterized in that** the first and second fabric parts (14, 16) are circular.

3. The gas bag as set forth in either of claims 1 and 2, **characterized in that** the tear seam (22) connects the first and second fabric parts (14, 16) to each other.

4. The gas bag as set forth in any of claims 1 to 3, **characterized in that** the tear seam (22) runs through the fabric strip (18).

5. The gas bag as set forth in any of claims 1 to 4, **characterized in that** the fold (24) is arranged in the interior of the gas bag (12).

6. The gas bag as set forth in any of claims 1 to 4, **characterized in that** the fold (24) is arranged outside the gas bag (12).

7. The gas bag as set forth in any of the preceding claims, **characterized in that** several tear seams (22, 22', 22") are provided, which are destructible one after the other.

8. The gas bag as set forth in claim 1, **characterized in that** the first and second fabric parts (14, 16) are oval or elliptical in shape.

## Revendications

1. Système de retenue à coussin à gaz, comportant un générateur de gaz (10) à plusieurs étages et un coussin à gaz (12) en liaison d'écoulement avec celui-ci, lequel présente deux parties en tissu (14, 16) séparées qui sont au moins approximativement congruentes, en prévoyant au moins une couture de déchirement (22) qui, à l'état intact, forme un pli (24) grâce auquel le volume du coussin à gaz (12) est réduit par rapport à un état avec une couture de déchirement (22) détruite,
**caractérisé en ce qu'**il est prévu une bande de tissu (18) qui est cousue avec le bord de la première partie en tissu (14) et avec le bord de la deuxième partie en tissu (16), et **en ce que** le pli (24) est formé dans la bande de tissu (18).

2. Coussin à gaz selon la revendication 1, **caractérisé en ce que** les première et deuxième parties (14, 16) en tissu sont circulaires.

3. Coussin à gaz selon l'une des revendications 1 et 2, **caractérisé en ce que** la couture de déchirement (22) relie les première et deuxième parties en tissu (14, 16) l'une à l'autre.

4. Coussin à gaz selon l'une des revendications 1 à 3, **caractérisé en ce que** la couture de déchirement (22) s'étend à travers la bande de tissu (18).

5. Coussin à gaz selon l'une des revendications 1 à 4, **caractérisé en ce que** le pli (24) est agencé à l'intérieur du coussin à gaz (12).

6. Coussin à gaz selon l'une des revendications 1 à 4, **caractérisé en ce que** le pli (24) est agencé à l'extérieur du coussin à gaz (12).

7. Coussin à gaz selon l'une des revendications précédentes, **caractérisé en ce qu'**il est prévu plusieurs coutures de déchirement (22, 22', 22") qui peuvent être détruites les unes après les autres.

8. Coussin à gaz selon la revendication 1, **caractérisé en ce que** les première et deuxième parties (14, 16) ont une forme ovale ou elliptique.
